# EUROPEAN PATENT SPECIFICATION

(11) **EP 2 075 420 B1**
(45) Date of publication and mention of the grant of the patent: **15.08.2012**
(21) Application number: 08172258.9
(22) Date of filing: 19.12.2008
(51) Int. Cl.: F02C 7/20, F01D 25/28, B64F 1/00, B64F 5/00, F02C 7/00, F02K 3/00

(54) **Method of preparing an engine for transportation**
Verfahren zur Herstellung eines Strahltriebwerks zum Transport
Procédé de préparation d'un moteur pour le transport

(30) Priority: 28.12.2007 US 966180
(43) Date of publication of application: 01.07.2009
(73) Proprietor: General Electric Company, Schenectady, NY 12345 (US)
(72) Inventor: Daniels, James Lloyd, Walton, KY 41094 (US)
(74) Representative: Williams, Andrew Richard

(56) References cited:
- EP-A- 1 452 707
- WO-A-99/02404
- US-A- 3 253 404
- US-A- 3 646 980
- US-A- 4 209 149

## Description

The technology described herein relates generally to gas turbine engines, and more particularly, to a method of preparing engines for ferry flights.

At least one known gas turbine engine assembly includes a fan assembly that is mounted upstream from a core gas turbine engine. During operation, a portion of the airflow discharged from the fan assembly is channeled downstream to the core gas turbine engine wherein the airflow is further compressed. The compressed airflow is then channeled into a combustor, mixed with fuel, and ignited to generate hot combustion gases. The combustion gases are then channeled to a turbine, which extracts energy from the combustion gases for powering the compressor, as well as producing useful work to propel an aircraft in flight. The other portion of the airflow discharged from the fan assembly exits the engine through a fan stream nozzle.

Gas turbine engines such as described herein are frequently installed on aircraft in pairs or multiples, such that in the course of normal operation the aircraft is propelled in flight by two, three, four, or more gas turbine engines. With such multi-engine installations, the aircraft may in some circumstances be safely operated with fewer than all installed engines operating.

In service, gas turbine engines are subject to ordinary wear and tear, as well as instances wherein the engine itself may experience unusual wear and tear due to external or internal causes which make continued operation of the engine impossible or inadvisable. Engines which are in need of service or repair to return to satisfactory operating condition frequently must be transported to a suitable service or repair facility, which may be located some distance from where the engine was taken out of service. To transport the engine, therefore, steps must be taken to remove the engine from the aircraft on which it is installed for transportation as cargo or it must be transported by the aircraft while still in its installed location. US 4209149 discloses an apparatus and method for modifying a jet engine so that it may be carried externally in an inoperative condition on an aircraft.

Some aircraft have been configured specifically to carry a non-operating gas turbine engine to transport the engine from one location to another, such as to a location where it is needed for operation or to a service or repair facility to be returned to service. A special fixed or removable mounting pylon may be provided for this purpose Other aircraft may be configured so as to be able to transport a non-operating gas turbine engine in a conventional mounting location.

When a non-operating aircraft gas turbine engine is carried aloft in an exposed position on the exterior of an aircraft (as opposed to being carried internally as cargo in a transport container), it is exposed to temperature and humidity changes as well as precipitation, dirt, debris, and other contaminants which may reach the core portion of the engine. Due to the possibility of moisture being present in the core portion of the engine after such a journey, a lengthy heating and drying process is normally required before the engine can be serviced or operated.

Additionally, the non-operating aircraft gas turbine engine may have internal parts, particularly in the core portion of the engine, which have been subject to wear, damage, or contamination such that free rotation (or windmilling) of the engine due to airflow experienced during a non-operating transport operation may cause further wear and/or damage to such parts.

Accordingly, there remains a need for a method for preparing and transporting non-operating aircraft gas turbine engines which limits exposure, to moisture and contamination, and free rotation, from transporting externally on an aircraft.

In one aspect according to the present invention, a method is described for preparing a gas turbine engine for a ferry flight. The engine has a core gas turbine engine, a spinner, and a plurality of external fan blades powered by the core gas turbine engine. The core gas turbine engine has an annular splitter for directing a portion of incoming airflow into the core gas turbine engine. The method comprises the steps of: a) removing the spinner; b) removing the fan blades; and c) securing a fairing in sealing engagement with the core gas turbine engine.

Various aspects and embodiments of the present invention will now be described in connection with the accompanying drawings, in which:
Figure 1 is a cross-sectional illustration of an exemplary gas turbine engine assembly;
Figure 2 is a partial cross-sectional elevational view of an exemplary gas turbine engine, illustrating an exemplary embodiment of a fairing installed on the engine;
Figure 3 is a cross-sectional view of the fairing of Figure 2 in a disassembled condition;
Figure 4 is a partial view of the exemplary gas turbine engine of Figure 1 illustrating an exemplary borescope motoring pad with a coverplate installed;
Figure 5 is a partial view of the borescope motoring pad of Figure 4 with the coverplate removed; and

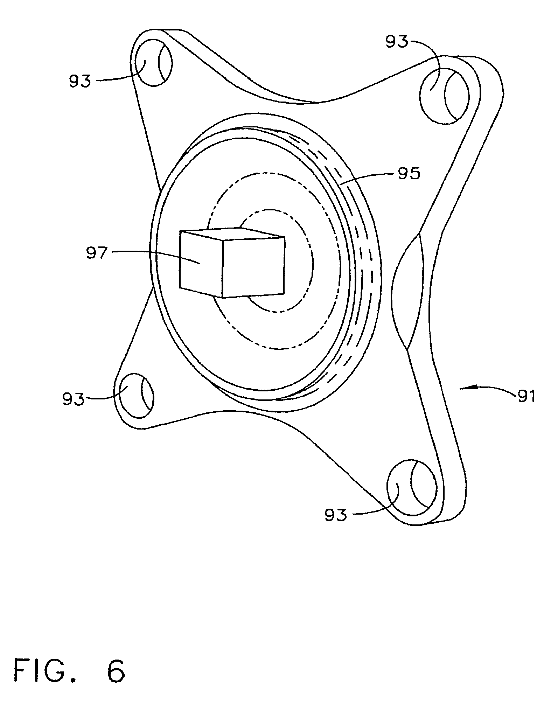

Figure 6 is a perspective view of an exemplary locking plate suitable for use with the borescope motoring pad of Figures 4 and 5.

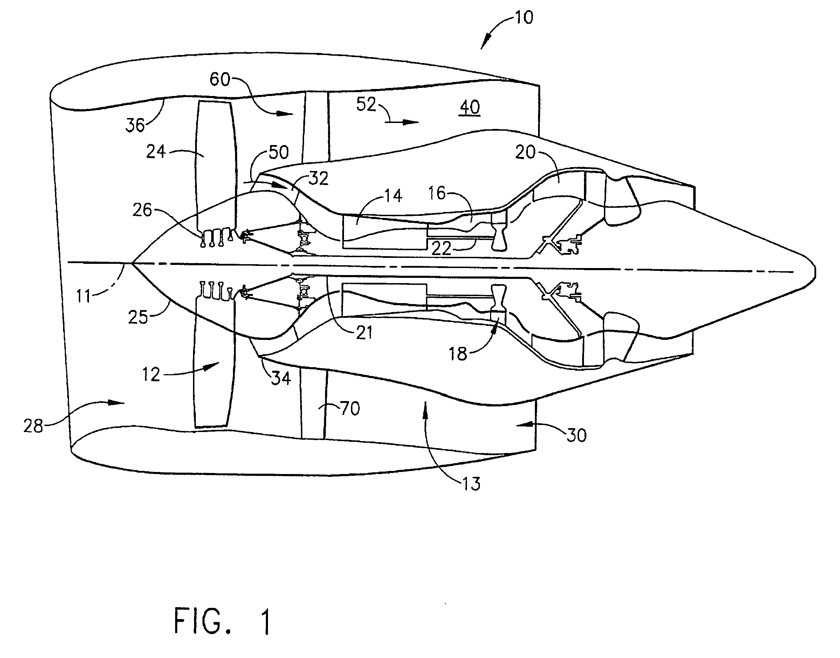

Figure 1 is a cross-sectional schematic illustration of an exemplary gas turbine engine assembly 10 having a longitudinal axis 11. Gas turbine engine assembly 10 includes a fan assembly 12 and a core gas turbine engine 13. Core gas turbine engine 13 includes a high pressure compressor 14, a combustor 16, and a high pressure turbine 18. In the exemplary embodiment, gas turbine engine assembly 10 also includes a low pressure turbine 20, and a multi-stage booster compressor 32, and a splitter 34 that substantially circumscribes booster 32.

Fan assembly 12 includes an array of fan blades 24 extending radially outward from a rotor disk 26, the forward portion of which is enclosed by a streamlined spinner 25. Gas turbine engine assembly 10 has an intake side 28 and an exhaust side 30. Fan assembly 12, booster 22, and turbine 20 are coupled together by a first rotor shaft , and compressor 14 and turbine 18 are coupled together by a second rotor shaft 22.

In operation, air flows through fan assembly 12 and a first portion 50 of the airflow is channeled through booster 32. The compressed air that is discharged from booster 32 is channeled through compressor 14 wherein the airflow is further compressed and delivered to combustor 16. Hot products of combustion (not shown in Figure 1) from combustor 16 are utilized to drive turbines 18 and 20, and turbine 20 is utilized to drive fan assembly 12 and booster 32 by way of shaft 21. Gas turbine engine assembly 10 is operable at a range of operating conditions between design operating conditions and off-design operating conditions.

A second portion 52 of the airflow discharged from fan assembly 12 is channeled through a bypass duct 40 to bypass a portion of the airflow from fan assembly 12 around core gas turbine engine 13. More specifically, bypass duct 40 extends between a fan casing or shroud 36 and splitter 34. Accordingly, a first portion 50 of the airflow from fan assembly 12 is channeled through booster 32 and then into compressor 14 as described above, and a second portion 52 of the airflow from fan assembly 12 is channeled through bypass duct 40 to provide thrust for an aircraft, for example. Splitter 34 divides the incoming airflow into first and second portions 50 and 52, respectively. Gas turbine engine assembly 10 also includes a fan frame assembly 60 to provide structural support for fan assembly 12 and is also utilized to couple fan assembly 12 to core gas turbine engine 13.

Fan frame assembly 60 includes a plurality of outlet guide vanes 70 that extend substantially radially between a radially outer mounting flange and a radially inner mounting flange and are circumferentially-spaced within bypass duct 40. Fan frame assembly 60 may also include a plurality of struts that are coupled between a radially outer mounting flange and a radially inner mounting flange. In one embodiment, fan frame assembly 60 is fabricated in arcuate segments in which flanges are coupled to outlet guide vanes 70 and struts. In one embodiment, outlet guide vanes and struts are coupled coaxially within bypass duct 40. Optionally, outlet guide vanes 70 may be coupled downstream from struts within bypass duct 40.

Fan frame assembly 60 is one of various frame and support assemblies of gas turbine engine assembly 10 that are used to facilitate maintaining an orientation of various components within gas turbine engine assembly 10. More specifically, such frame and support assemblies interconnect stationary components and provide rotor bearing supports. Fan frame assembly 60 is coupled downstream from fan assembly 12 within bypass duct 40 such that outlet guide vanes 70 and struts are circumferentially-spaced around the outlet of fan assembly 12 and extend across the airflow path discharged from fan assembly 12.

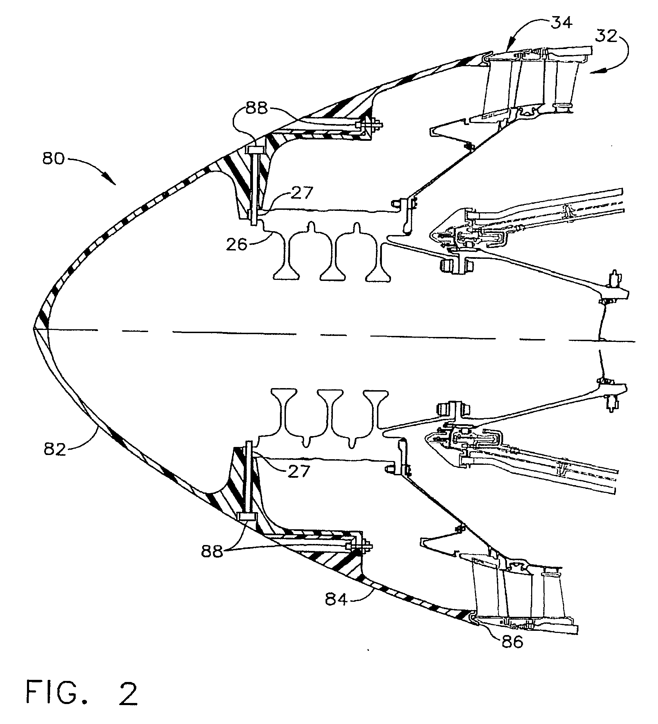

Figure 2 is a partial cross-sectional elevational view of the forward portion of an exemplary aircraft gas turbine engine such as depicted in Figure 1. As shown in Figure 2, a fairing 80 has been installed on the core gas turbine engine 13 in place of the spinner 25 and the fan blades 24 which have been removed and stored separately for transportation. In the embodiment shown in Figure 2, the fairing 80 is of two-piece construction, comprising an inner portion 82 and an outer portion 84. Inner portion 82 and outer portion 84 are joined to one another as well as to the fan rotor 26 by bolts or other suitable fasteners 88 and suitably located mounting holes provided in the fairing components. Mounting holes 27 in the fan rotor 26, such as may typically be used to fasten the spinner 25 in place, may be utilized to secure the fairing 80 via fasteners 88.

Depending upon the physical configuration of the gas turbine engine upon which the fairing 80 is to be installed, the fairing may be of one-piece (i.e., unitary) construction or multi-piece (i.e., two or more pieces) construction. The fairing 80 has a generally streamlined shape, typically of rounded conical or bullet-shaped design, to minimize drag on the engine during transport. The elements of the fairing are sized, shaped, and adapted to suit the characteristics of the particular engine application desired.

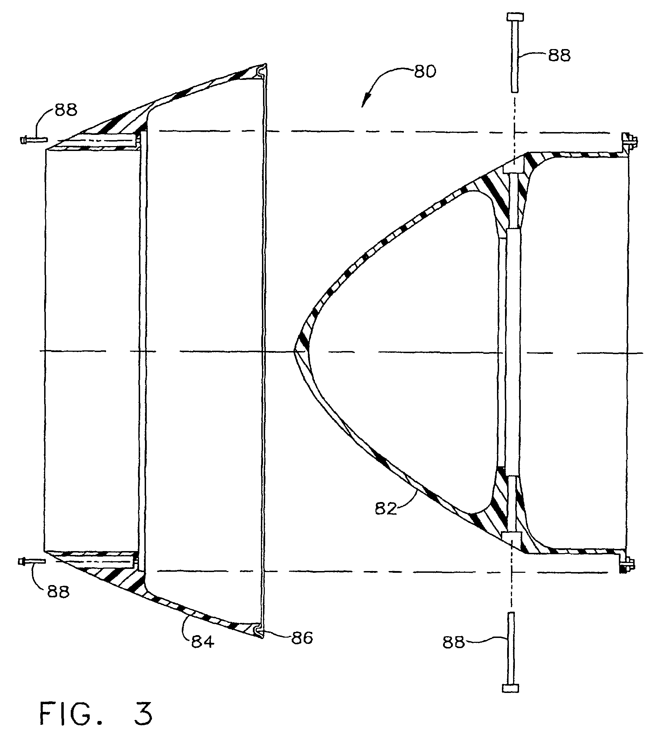

Figure 3 is a cross-sectional elevational view of the fairing 80, similar to the view of Figure 2 but showing the fairing 80 in a disassembled condition and depicting the relationship of inner and outer portions 82 and 84, respectively. In the embodiment shown, the outer portion 84 is of annular configuration and surrounds and is secured to the inner portion 82. Also shown in Figure 3 is an annular seal 86, which may be formed from rubber, foam, plastic, or other conformable material, which abuts and forms a substantially if not fully airtight seal against splitter 34 when the fairing 80 is installed on the core gas turbine engine 13. Other configurations may be possible wherein the annular seal 86 is integrally formed with the fairing 80, such as wherein the fairing 80 is formed from a material which is suitably compliant so as to conform to and sealingly engage the splitter 34.

For the embodiment shown in Figures 2 and 3, the fairing 80 is installed after removing and separately storing the spinner 25 and fan blades 24. The inner portion 82 of the fairing 80 is installed on the fan rotor 26 via mounting holes 27 and a plurality of fasteners 88. The outer portion of the fairing 84 is then installed over and around the inner portion 82 and is fastened to the inner portion 82 via fasteners 88. As the outer portion 84 is secured in position, outer portion 84 moves axially toward the core gas turbine engine and the annular seal 86 comes into contact with and sealingly engages the forward portion of the splitter 34, so as to seal the opening of the booster 32 and prevent introduction of moisture, contaminants, and airflow into the booster 32 and thus into the core gas turbine engine 13. As such, for the embodiment shown the process of securing the fairing 80 to the core gas turbine engine is a two phase operation wherein the first portion is secured first, followed by the second portion.

By effectively sealing the front of the booster 32, the fairing 80 prevents air from flowing through the booster 32 during flight and imparting any rotational forces to the booster 32 (and any other rotating turbomachinery or accessories which share shaft 21 with booster 32). Air is also prevented from flowing through the compressor 14, as well as through both high pressure turbine 18 and low pressure turbine 20, and thereby avoiding imparting any rotational forces to those components (and any other rotating turbomachinery or accessories connected to shafts 21 or 22).

Additionally, the sealing engagement of the fairing 80 with the splitter 34 coupled with the mechanical engagement of the fairing 80 with the fan rotor 26 (via fasteners 88) provides mechanical resistance to rotation for fan rotor 26 and any other components within the core gas turbine engine 13 which are associated with the shaft 21 to which the fan rotor 26 is attached.

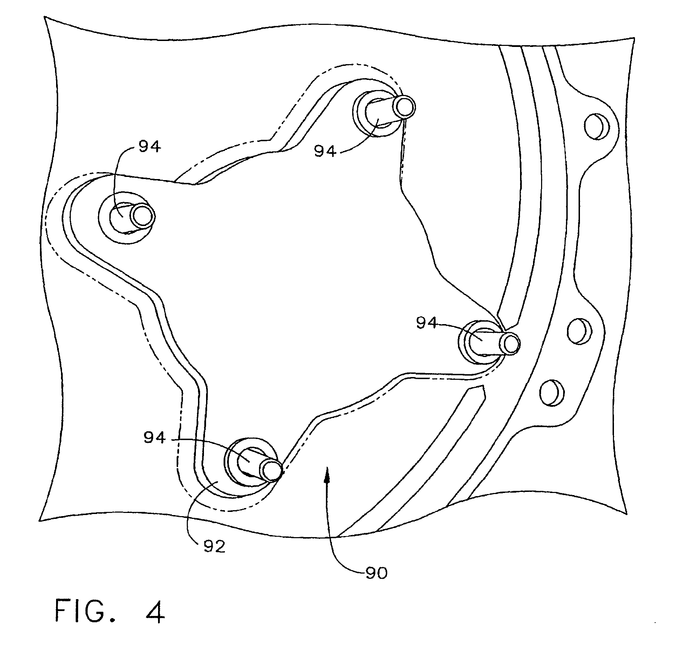

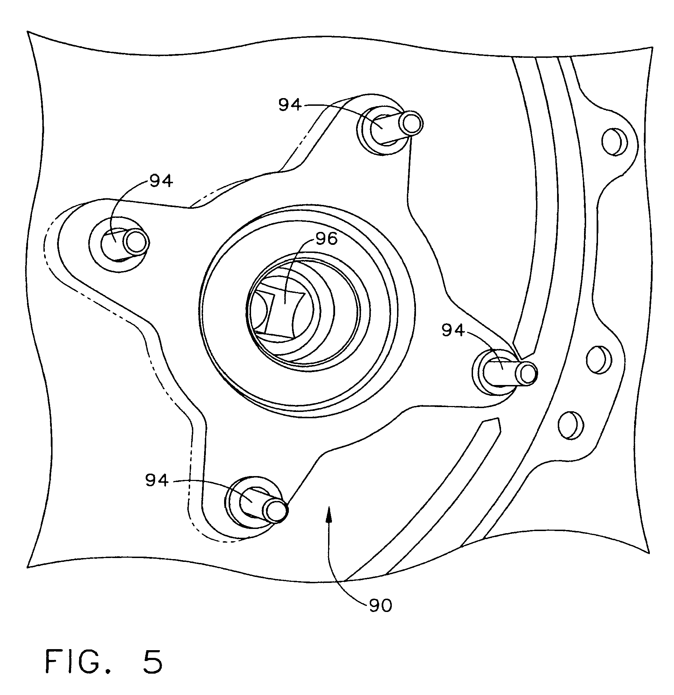

Many aircraft gas turbine engines have a location where a device can be attached to rotate the core gas turbine engine 13 for inspection and/or service operations, such as borescope inspection. This location (shown in Figures 4 and 5) is commonly referred to as a borescope motoring or turning pad 90. Borescope motoring pad 90 is a location where a coverplate 92 can be removed via fasteners 94 (such as bolts, pins, screws, or other fasteners) to expose a socket 96 which is adapted for engagement by a tool (such as a ½ inch square drive ratchet, wrench, or bar) or a motorized drive assembly to rotate the core gas turbine engine 13 through a suitable gearbox assembly.

To provide additional optional mechanical security against rotation of the core gas turbine engine 13 during a transport operation, a rotor lock 91 of suitable configuration for the particular engine application may be utilized. Such a rotor lock has suitable mounting holes 93, a seal 95, and a knob 97 of suitable configuration to engage the socket 96. The rotor lock 91 may be installed on the borescope motoring pad 90, engaging the socket 96 and sealing the opening via seal 95, and secured in place via fasteners 94, thereby mechanically preventing rotation of the socket 96 and all other rotating parts mechanically coupled to the socket 96. Rotor locks such as rotor lock 90 may be fabricated of any suitable material, such as metallic or composite materials, having suitable strength to resist turning motion of the socket 96.

In the exemplary embodiment, the fairing 80 may be a fiberglass material, a graphite material, a carbon material, a ceramic material, an aromatic polyamid material such as KEVLAR, a thin metallic material such as, but not limited to, titanium, aluminum, and/or a Metal Matrix Composite (MMC) material, and/or mixtures thereof. Any suitable thermosetting polymeric resin can be used in forming fairing 80, for example, vinyl ester resin, polyester resins, acrylic resins, epoxy resins, polyurethane resins, bismalimide resin, and mixtures thereof. Overall, the material is selected such that an exterior surface of fairing 80 is resistant to wear and or damage that may be caused by foreign objects ingested into gas turbine engine assembly 10. Alternate fairing configurations may use a thin metal wrap over a composite fairing to protect against such wear or damage.

This written description uses examples to disclose the invention, including the preferred mode, and also to enable any person skilled in the art to make and use the invention.

## Claims

1. A method of preparing a gas turbine engine for a ferry flight, said engine having a core gas turbine engine (13), a spinner (25), and a plurality of external fan blades (24) powered by said core gas turbine engine (13), said core gas turbine engine (13) having an annular splitter (34) for directing a portion (50) of incoming airflow into said core gas turbine engine (13), said method comprising the steps of:
removing said spinner (25);
removing said fan blades (24); and
securing a fairing (80) in sealing engagement with said splitter (34), wherein said fairing (80) has a first portion (82) adapted for securement to said fan rotor (26) and an annular second portion (84) which surrounds and is secured to said first portion (82), whereby said securing step is a two phase operation.

2. The method of claim 1, wherein said fairing (80) is mechanically engaged to the fan rotor to provide mechanical resistance to rotation and substantially prevent airflow from imparting rotational energy to said core gas turbine engine (13).

3. The method of any of the preceding claims, wherein said first portion (82) is secured first, followed by said second portion (84).

4. The method of any of the preceding claims, wherein said securing step includes translating said fairing (80) axially into sealing engagement with said splitter (34).

5. The method of any of the preceding claims, further comprising the step of storing said spinner (25) and said fan blades (24) for transportation.

6. The method of any of the preceding claims, wherein said securing step is accomplished with a plurality of fasteners (88).

7. The method of any of the preceding claims, further comprising the step of securing a rotor lock (91) for preventing rotation of components within said core gas turbine engine (13).

## Patentansprüche

1. Verfahren zum Vorbereiten eines Gasturbinentriebwerks für einen Überführungsflug, wobei das Triebwerk ein Kerngasturbinentriebwerk (13), einen Spinner (25) und mehrere von dem Kerngasturbinentriebwerk (13) angetriebene äußere Bläserlaufschaufeln (24) besitzt, wobei das Kerngasturbinentriebwerk (13) einen ringförmigen Teiler (34) hat, um einen Teil (50) des ankommenden Luftstroms in das Kerngasturbinentriebwerk (13) zu leiten, wobei das Verfahren die Schritte aufweist:
Entfernen des Spinners (25); und
Entfernen der Bläserlaufschaufeln (24); und
Befestigen einer Verkleidung (18) in einen dichtenden Eingriff mit dem Teiler (34), wobei die Verkleidung (40) einen für eine Befestigung an dem Bläserrotor (26) angepassten ersten Abschnitt (82) und einen ringförmigen zweiten Abschnitt (84) hat, welcher den ersten Abschnitt umgibt und daran befestigt ist, wodurch der Befestigungsschritt eine Zweiphasenoperation ist.

2. Verfahren nach Anspruch 1, wobei die Verkleidung (80) mechanisch mit dem Bläserrotor in Eingriff steht, um einen mechanischen Widerstand gegen Drehung bereitzustellen und im Wesentlichen zu verhindern, dass ein Luftstrom dem Kerngasturbinentriebwerk (13) Rotationsenergie verleiht.

3. Verfahren nach einem der vorstehenden Ansprüche, wobei der erste Abschnitt (82) zuerst, gefolgt von dem zweiten Abschnitt (84) befestigt wird.

4. Verfahren nach einem der vorstehenden Ansprüche, wobei der Befestigungsschritt eine axiale Verschiebung der Verkleidung (80) in einen Dichtungseingriff mit dem Teiler (34) beinhaltet.

5. Verfahren nach einem der vorstehenden Ansprüche, ferner mit dem Schritt der Verstauung des Spinners (25) und der Bläserlaufschaufeln (24) für den Transport.

6. Verfahren nach einem der vorstehenden Ansprüche, mittels mehrerer Befestigungselemente (88) erreicht wird.

7. Verfahren nach einem der vorstehenden Ansprüche, ferner mit dem Schritt der Befestigung einer Rotorarretierung (91), um eine Drehung von Komponenten in dem Kerngasturbinentriebwerk (13) zu verhindern.

## Revendications

1. Procédé de préparation d'un moteur à turbine à gaz pour un vol de convoyage, ledit moteur ayant un générateur de gaz (13) de turbine, une casserole (25), et une pluralité de pales extérieures (24) de soufflante animées par ledit générateur de gaz (13) de turbine, ledit générateur de gaz (13) de turbine ayant un diviseur annulaire (34) servant à diriger jusque dans ledit générateur de gaz (13) une partie (50) d'un flux d'air entrant,ledit procédé comportant les étapes de :
dépose de ladite casserole (25) ;
dépose desdites pales (24) de soufflante ; et
fixation d'un capotage (80) de manière étanche au contact dudit diviseur (34), ledit capotage (80) ayant une première partie (82) conçue pour se fixer à un rotor (26) de ladite soufflante et une seconde partie annulaire (84) qui entoure ladite première partie (82) et y est fixée, ladite étape de fixation étant ainsi une étape en deux temps.

2. Procédé selon la revendication 1, dans lequel ledit capotage (80) est associé mécaniquement au rotor de soufflante pour opposer une résistance mécanique à la rotation et sensiblement empêcher qu'un flux d'air ne communique une énergie de rotation audit générateur de gaz (13) de turbine.

3. Procédé selon l'une quelconque des revendications précédentes, dans lequel c'est ladite première partie (82) qui est fixée la première, suivie par ladite seconde partie (84).

4. Procédé selon l'une quelconque des revendications précédentes, dans lequel ladite étape de fixation comprend un déplacement axial dudit capotage (80) pour le placer d'une manière étanche au contact dudit diviseur (34).

5. Procédé selon l'une quelconque des revendications précédentes, comportant en outre l'étape de rangement de ladite casserole (25) et desdites pales (24) de soufflante en vue du transport.

6. Procédé selon l'une quelconque des revendications précédentes, dans lequel ladite étape de fixation s'accomplit à l'aide d'une pluralité de fixations (88).

7. Procédé selon l'une quelconque des revendications précédentes, comportant en outre l'étape de fixation d'un verrou (91) de rotor pour empêcher que des pièces ne tournent à l'intérieur dudit générateur de gaz (13) de turbine.
